# EUROPÄISCHE PATENTSCHRIFT

(11) **EP 1 845 807 B1**
(45) Veröffentlichungstag und Bekanntmachung des Hinweises auf die Patenterteilung: **07.09.2011**
(21) Anmeldenummer: 06701077.7
(22) Anmeldetag: 01.02.2006
(51) Int. Cl.: A23L 3/02, A23L 3/10, B65D 77/22, B65D 81/34

(54) **VERFAHREN ZUM HALTBARMACHEN VON LEBENSMITTELN**
METHOD FOR PRESERVING FOODSTUFFS
PROCEDE DE CONSERVATION D'ALIMENTS

(30) Priorität: 10.02.2005 CH 219052005
(43) Veröffentlichungstag der Anmeldung: 24.10.2007
(73) Patentinhaber: MicroPast GmbH, 6300 Zug (CH)
(72) Erfinder: KURTZ, Silvia, CH-8193 Eglisau (CH); KELLER, Karl, 8197 Rafz (CH)
(74) Vertreter: Lauer, Joachim
(86) Internationale Anmeldenummer: PCT/CH2006/000063
(87) Internationale Veröffentlichungsnummer: WO 2006/084402

(56) Entgegenhaltungen:
- EP-A- 1 076 012
- EP-A- 1 291 298
- EP-A- 1 357 055
- EP-A- 1 359 097
- WO-A-2004/045985
- DE-A1- 10 210 833
- "Container for packing food is suitable for heating in microwave oven and can be used for live shellfish in conjunction with vegetables and-or herbs and one or more sauces" DERWENT, 2001, XP002264598
- DATABASE WPI Section Ch, Week 199311 Derwent Publications Ltd., London, GB; Class D14, AN 1993-089226 XP002348548 & JP 05 033941 A (FUJI MAC KK) 9. Februar 1993 (1993-02-09)

## Beschreibung

### TECHNISCHES GEBIET

Die vorliegende Erfindung betrifft ein Verfahren zum Haltbarmachen und insbesondere zum Pasteurisieren von Lebensmitteln, bei welchem die Lebensmittel im feuchten Zustand in einem als Transport- und Verkaufsverpackung geeigneten Behälter mit Entlüftungsöffnung während einer begrenzten Zeit, zumindest jedoch solange mit Mikrowellen erhitzt werden, bis sich heisser Dampf in dem Behälter bildet und durch die Entlüftungsöffnung austritt.

Zur weiteren Verwendung für den Transport und den Verkauf muss die Entlüftungsöffnung des Behälters, selbst wenn diese nur klein ist, verschlossen werden, um eine Kontaminierung der Lebensmittel mit Keimen sowie ggf. ein Auslaufen von Flüssigkeit aus dem Behälter zu vermeiden.

### STAND DER TECHNIK

Ein Verfahren der vorgenannten Art ist z.B. bekannt aus WO 2004/045985 A1. Bei dem bekannten Verfahren wird ein Behälter mit einem flexiblen Boden und einer flexiblen Abdeckfolie eingesetzt, in welcher als Entlüftungsöffnung ein Ventil angeordnet ist. Das Ventil öffnet sich beim Erhitzen selbsttätig unter der Wirkung des dabei in dem Behälter entstehenden Überdrucks und lässt Dampf entweichen. Bereits kurz nach dem Erhitzen, mit beginnender Abkühlung und dadurch bedingtem Druckabfall, schliesst das Ventil selbsttätig wieder. In der Folge kommt es mit weiterer Abkühlung und durch Kondensation des Dampfes zu einem weiteren starken Druckabfall, der praktisch zu einem Vakuum im Behälter führt. Der flexible Boden und die flexible Abdeckfolie des Behälters wölben sich unter der Wirkung des Vakuums nach innen und schliessen die im Behälter vorhandenen Lebensmittel fest zwischen sich ein.

Der gleiche Effekt wird beschrieben in WO 00/03605A1 und in WO 03/087993 A1 sogar ausgenutzt zur engen und festen Ummantelung der Lebensmittel mit einer besonders flexiblen Abdeckfolie.

Aus EP 1 076 012 A1 ist ein Zubereitungsverfahren für Lebensmittel bekannt, bei welchem die Lebensmittel im feuchten Zustand in einem Behälter mit teilweise flexibler Abdeckfolie und einem Überdruckventil während einer begrenzten Zeit, zumindest jedoch solange mit Mikrowellen erhitzt werden, bis sich Dampf in dem Behälter bildet und durch ein Überdruckventil austritt. Dieses bekannte Verfahren ist vor allem dazu vorgesehen und geeignet, Lebensmittel in roh-frischem Zustand in dem Behälter in den Verkauf zu bringen und in dem Behälter erst durch den Endabnehmer unmittelbar vor ihrem Verzehr in einem Mirkowellenofen zu garen. Durch das Mikrowellendampfgaren unter erhöhtem Druck werden die Lebensmittel innerhalb nur weniger Minuten aus ihrem Rohzustand heraus äusserst schonend gegart, wobei ihr Nährstoffinhalt, ihre Konsistenz, ihre Farbe sowie ihr Eigengeschmack weitestgehend erhalten bleiben.

Im Rahmen dieser Anwendung wäre die Ausbildung eines Vakuums im Behälter wie vorbeschrieben allerdings ungünstig. Die gerade frisch zubereiteten Lebensmittel würden durch die sich einwölbende Abdeckfolie ggf. zerquetscht und es würde ggf. auch Flüssigkeit aus ihnen herausgepresst. Das durch das Verfahren gerade erreichte, sehr ansprechende Aussehen der Lebensmittel würde zerstört. Auch würde der Behälter als solcher unansehlich deformiert. EP 1 076 012 A1 löst dieses Problem durch eine besondere Ausbildung des Überdruckventils. Dieses wird während des Erhitzens so verändert, dass es anschliessend nicht oder zumindest nicht mehr sofort wieder schliessen kann. Hierdurch wird die Ausbilung eines Vakuums in dem Behälter verhindert. Die Zerstörung des Ventils stellt bei dem Verfahren gemäss EP 1 076 012 A1 kein Problem dar, weil hierbei die Lebensmittel unmittelbar nach ihrer Zubereitung zum Verzehr vorgesehen sind. Auch ist der Behälter nur zur einmaligen Benutzung ausgebildet und wird anschliessend nicht mehr benötigt. Für eine Haltbarmachung der Lebensmittel durch Erhitzen bereits beim Hersteller vor der Transport- und Verkaufsphase wäre das Verfahren gemäss EP 1 076 012 A1 wegen des dabei zerstörten Überdruckventils dagegen nicht einsetzbar.

Zur zumindest teilweisen Vermeidung des Vakuumproblems wird in EP 1 359 097 A1 bei einem entsprechenden Verfahren vorgeschlagen, die Mikrowelleneinwirkung beim Pasteurisieren so zu dimensionieren, dass der entstehende Unterdruck nicht so gross wird, dass der Behälter zerstört oder völlig deformiert wird. In der Praxis bedeutet dies aber, dass zu einer wirksamen Pasteurisierung bei niedrigerer Temperatur um mindestens einen Faktor 10 länger als bei der EP 1 076 012 A1 erhitzt werden muss, wodurch die mit dem Zubereitungsverfahren gemäss der EP 1 076 012 A1 und durch die kurzen Garzeiten erreichten Vorteile so gut wie vollständig wieder verloren gehen.

Bekannt sind weiter Lösungen, bei welchen eine Entlüftungsöffnung ohne Ventil nach dem Erhitzen beispielsweise mit einem Aufkleber aktiv verschlossen wird. Hierbei könnte mit dem Verschliessen grundsätzlich zugewartet werden, bis sich der Behälter und die Lebensmittel ausreichend abgekühlt haben und sich ein Druckausgleich durch die Entlüftungsöffnung hindurch eingestellt hat. Die dafür benötigte Zeit wäre jedoch erheblich und würde zu Lasten einer effektiven Produktionsrate gehen. Durch die während des Druckausgleichs in den Behälter einströmende Luft könnten auch Keime in den Behälter gelangen und die Haltbarkeit der Lebensmittel beeinträchtigen. Die Ausführung des Druckausgleichs unter einer sterilen Schutzgasatmosphäre wäre apparativ zumindest aufwendig.

Es kann vorgesehen sein, dass die Lebensmittel vom Endverbraucher vor ihrem Verzehr erneut erhitzt werden und dass dies auch wieder in dem Behälter sowie ggf. wieder unter Einsatz von Mikrowellen erfolgt. Da die Lebensmittel durch das vorgängige Erhitzen zur Haltbarmachung bzw. das Pasteurisieren zumindest teilweise bereits vorgegart sind, genügt hierbei in der Regel ein Aufwärmen. Man spricht in diesem Zusammenhang auch von Regenerieren im Unterschied zum Garen aus dem Rohzustand. Dennoch kann es aber auch hierbei zu einer Überdrucksituation im Behälter kommen. Sofern ein selbsttätig öffnendes Ventil vorhanden ist, kann dieses die Druckentlastung übernehmen. Sofern eine Entlüftungsöffnung nach dem Haltbarmachen z. B mit einem Aufkleber verschlossen wurde, steht eine selbsttätige Druckentlastung ggf nicht mehr zur Verfügung. Entsprechend wird vom Endverbraucher häufig verlangt, dass der den Behälter vor dem Erwärmen z.B. einsticht oder die verschlossene Entlüftungsöffnung, z.B. durch Entfernen des auf ihr aufgebrachten Aufklebers, wieder freilegt. Es sind allerdings auch schon Aufkleber bekannt geworden, welche sich unter Erwärmung ablösen und dadurch die Entlüftungsöffnung selbsttätig wieder freigeben.

In EP 1 359 097 A1 werden schliesslich einleitend auch noch weitere Verfahren des Standes erwähnt, unter anderem das Erhitzen von Behältern ohne Entlüftungsöffnung unter Gegendruck, die jedoch wenig rationell sind und eine komplizierte und aufwendige Anlagentecknik erfordern.

### DARSTELLUNG DER ERFINDUNG

Die Erfindung stellt sich die Aufgabe, ein Verfahren zum Haltbarmachen und insbesondere zum Pasteurisieren von Lebensmitteln der eingangs genannten Art anzugeben, mit welchem sich die Vorteile des aus EP 1 076 012 A1 bekannten Zubereitungsverfahrens auch beim Hersteller und damit bereits vor der Transport- und Verkaufsphase erreichen lassen.

Diese Aufgabe wird erfindungsgemäss gelöst durch die in den Patentansprüchen angegebenen Merkmale. Der Kern der Erfindung besteht demnach darin, dass zur wenigstens teilweisen Kompensation des Druckabfalls in dem Behälter nach dem Ende des Erhitzens ein Gas in den Behälter injiziert wird.

Die Injektion des Gases kann einfach und schnell in nur wenigen Sekunden und unter einigen bar Druck z.B. mit einer Kanüle ausgeführt werden. Die Kanüle kann hierzu ggf. durch die Entlüftungsöffnung eingeführt werden. Bevorzugt wird mit der Kanüle jedoch eine Wandung des Behälters durchstochen und der Behälter mit dem Gas unter Austreiben von Dampf durch die Entlüftungsöffnung gespült. Thermisch günstig ist es, wenn das Injektionsgas vorgekühlt ist.

Weiter bevorzugt wird als Injektionsgas ein sauerstoffarmes oder -freies Gas verwendet und mit diesem ausser dem Dampf auch noch der in dem Behälter vorhandene, für die Haltbarkeit der Lebensmittel besonders schädliche Sauerstoff aus dem Behälter ausgespült. Besonders gute Haltbarkeiten lassen sich erzielen, wenn als Injektionsgas ein Inertgas wie Stickstoff oder ein antibakteriell wirkendes Gas wie CO₂ oder eine Mischung dieser beiden Gase verwendet wird.

Die Abdichtung des ggf. bei der Injektion des Gases erzeugten Einstichlochs in der Behälterwand kann in einfacher Weise z.B.durch Aufbringen eines Aufklebers auf die Behälterwand ausgeführt werden.

Durch Aufbringen eines Aufklebers könnte auch die Entlüftungsöffnung abgedichtet werden, sofern für diese nicht ein sich unter Überdruck selbsttätig öffnendes und nach Abfall des Überdrucks selbsttätig wieder schliessendes Ventil verwendet wird. Aber selbst in diesem Falle kann es, z.B. zum absolut sicheren Verschluss von Vorteil sein, auch das Ventil mit einem Aufkleber abzudecken. Sofern eine selbsttätige Öffnung der Verpackung zur Druckentlastung beim Regenerieren erforderlich ist, kann ein sich unter Wärmeeinwirkung ablösender Aufkleber eingesetzt werden.

Gegenüber einem sich unter Wärmeeinwirkung ablösenden Aufkleber hat ein Ventil aber immer noch den Vorteil, dass es auch während der Lagerung, des Transports undloder während des Verkaufs z.B. ein Ausgasen der Lebensmittel erlaubt. Nach einer üblichen Pasteurisation ist die enzymatische Tätigkeit der Lebensmittel als Ursache einer Gasentwicklung in der Regel aber nur schwach ausgeprägt.

Sollen beide Öffnungen mit einem Aufkleber angedeckt werden, wird dazu mit Vorteil ein und derselbe Aufkleber verwendet. Die beiden Öffnungen sollten in diesem Fall nicht allzu weit voneinander entfernt sein.

Für die Verwendung Im Rahmen der Erfindung geeignet sind insbesondere die in EP 1 076 012 A1 oder EP 1 359 097 A1 beschrieben Ventile, welche allerdings durch die während des Erhitzens auftretenden insbesondere thermischen Belastungen nicht zerstört werden dürfen. Diese Ventile weisen einen geeigneten und durch einen formstabilen Ventilkörper auch stabilen, sich unter den auftretenden Belastungen nicht verändernden Strömungswiderstand auf.

Ein definierter und annährend konstanter Strömungswiderstand ist wichtig, damit das Ergebnis des Haltbarmachungsprozesses in einem engen Toleranzbereich voraussagbar und wiederholbar ist. Auch wenn nur von einer einfachen Entlüftungsöffnung ohne Ventilfunktion Gebrauch gemacht wird, sollte diese einen definierten, sich möglichst nicht verändernden Querschnitt aufweisen.

Im Rahmen des erfindungsgemässen Verfahrens ist es möglich sowie bevorzugt, rohfrische Lebensmittel einsetzen. In diesem Falle sollte zur ihrer Garung und ausreichenden Haltbarmachung beim Erhitzen in dem Behälter eine Temperatur von wenigstens 100 °C im Dampf bzw. 80°C in der Kernzone der Lebensmittel erzeugt werden. Mit den erfindungsgemäss eingesetzten Mikrowellen ist dies, je nach Produktgewicht, innerhalb 1 - 7 Minuten erreichbar.

Damit der Behälter dafür sicher einsetzbar ist, sollten er in der Lage sein, während des Erhitzens Temperaturen bis zu 150 °C und/oder einen Überdruck von bis zu 1.5 bar auszuhalten.

Damit ausreichend hohe Temperaturen und/oder Drücke während des Erhitzens überhaupt erreicht werden können, darf der Strömungsquerschnitt der Entlüftungsöffnung nicht zu gross sein. Der entstehende Dampf muss in dem Behälter zu einem gewissen Grad gestaut werden. Dies wird z.B. erreicht, wenn die Entlüftungsöffnung einen Strömungsquerschnitt von 1-20 mm², vorzugsweise jedoch von 3 - 7 mm², aufweist.

Die aus EP 1 076 012 A1 bekannten Behälter genügen den vorstehenden Anforderungen und lassen sich deshalb auch im Rahmen der vorliegenden Erfindung einsetzen. Ihre Abdeckfolie weist eine Dicke zwischen 40 - 200 µm auf. Einsetzbar wären auch beutelartige Behälter ganz aus einer solchen Kunststofffolie oder Behälter mit fester Kunststoffschale und rigidem Deckel. Letztere könnten aus Hartfolien oder durch Spitzgiessen hergestellt sein und eine Wandstärke im Bereich zwischen 600 - 3000 µm haben. Die Verpackungsgrössen können zwischen 10 g für kleine Einzelportionen und 5000 g für Grossverbrauchergebinde variieren.

Die Lebensmittel könnten vor dem Einfüllen in den Behälter ganz oder teilweise auch schon vorgegart und/oder blanchiert sein.

Durch die Injektion eines sauerstoffarmen Gases kann, wie erläutert, der für die Haltbarkeit der Lebensmittel schädliche Sauerstoff zumindest teilsweise aus dem Behälter entfernt werden. Zusätzlich unterstützt werden kann diese Reduktion des Sauerstoffs, indem die Lebensmittel bereits schon unter reduziertem Druck und/oder in einer sauerstoffarmen Schutzgasatmospäre in dem Behälter abgepackt werden.

Wie an sich üblich, werden die Behälter mit den nach der Erfindung haltbar gemachten Lebensmitteln für die sich anschliessende Lager, Transport- und Verkaufphase einer Kühlkette mit Kühltemperaturen zwischen 1 - 8 °C zugeführt.

Gemäss einer weiteren bevorzugten Ausführungsart der Erfindung wird das Erhitzen im Durchlauf des Behälters durch einen Mikrowellentunnel oder eine Mikrowellenkammer ausgeführt.

Dem Mikrowellentunnel schliesst sich bevorzugt unmittelbar eine Injektionsstation an, in welcher die Injektion des Gases ebenfalls im Durchlauf ausgeführt wird. Bevorzugt wird in der Injektionsstation unmittelbar im Anschluss an die Gasinjektion auch noch das Aufbringen des oder der Aufkleber/s ausgeführt, obwohl auch hierfür grundsätzlich eine eigene Station vorgesehen sein könnte.

Zum Transport des Behälters durch den Mikrowellentunnel und durch die Injektionsstation wird mit Vorteil eine Transportvorrichtung eingesetzt. Es kann sich dabei insbesondere um dieselbe Transportvorrichtung handeln. Zur Rationalisierung des Verfahrens können die Behälter in mehreren Reihen nebeneinander durch den Mikrowellentunnel und/oder die Injektionsstation transportiert werden.

### KURZE ERLÄUTERUNG DER FIGUREN

Die Erfindung soll nachfolgend anhand von Ausführungsbeispielen im Zusammenhang mit der Zeichnung näher erläutert werden. Es zeigen:

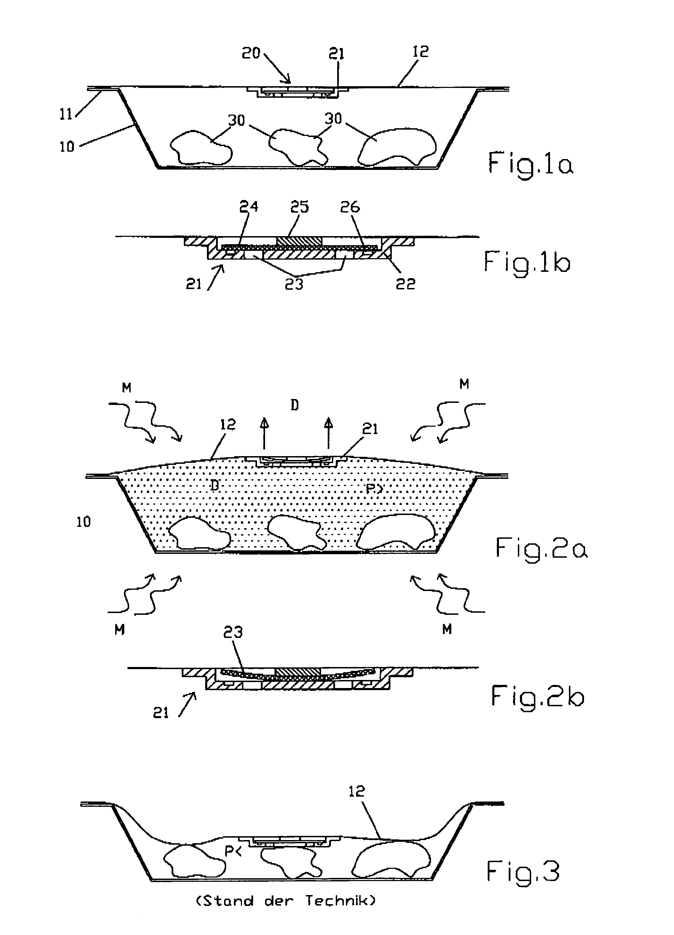

- Fig. 1a: einen zur Verwendung im Rahmen des erfindungsgemässen Verfahrens geeigneten Behälter mit Ventil als Entfüftungsöffnung und mit Lebensmitteln vor ihrer Haltbarmachung;
- Fig. 1 b: das Ventil von Fig. 1a in vergrösserter Darstellung;
- Fig. 2a: den Behälter von Fig. 1 während eines Erhitzens mittels 2 Mikrowellen;
- Fig. 2b: das Ventil von Fig. 2a in vergrösserter Darstellung;
- Fig. 3: denselben Behälters wie in Zig. 1 oder 2 nach Wiederabkühlung und Kondensation des während des Erhitzens entstandenen Dampfes gemäss dem Stand der Technik;
- Fig. 4: die Injektion eines Gases mittels einer Kanüle in den Behälter nach einem Erhitzen gemäss Fig. 2;
- Fig. 4a: eine bevorzugte Ausführungsform der Kanülenspitze in einer vergrösserten Darstellung;
- Fig. 5: das Verschliessen des durch die Kanüle gemäss Fig. 4 verursachten Einstichloches mittels eines Aufklebers;
- Fig. 6: den Behälter der vorhergehenden Figuren mit den gemäss der Erfindung haltbar gemachten Lebensmitteln;
- Fig. 7: einen weiteren, zur Verwendung im Rahmen des erfindungsgemässen Verfahrens geeigneten Behälter mit einfacher Entfüftungsöffnung und mit Lebensmitteln in der Phase entsprechend Fig. 4, wobei das Gas mittels einer Kanüle durch die Entlüftungsöffnung injiziert wird;
- Fig. 8: den Behälter von Fig. 7 nach Rückzug der Kanüle und Verschluss der Entlüftungsöffnung mit einem Aufkleber;
- Fig. 9: einen Behälter mit Lebensmitteln gemäss Fig. 8, wobei jedoch mit der Kanüle neben der Entlüftungsöffnung eingestochen wurde und der Aufkleber zur Abdichtung der Enstichloches entsprechend vergrössert ist,
- Fig. 10: eine Vorrichtung zur automatisierten Durchführung des erfindungsgemässen Verfahrens.

### WEGE ZUR AUSFÜHRUNG DER ERFINDUNG

Fig. 1a zeigt einen schalenförmigen Behälter 10 aus Kunststoff mit einem umlaufenden Rand 11, auf welchem, ebenfalls umlaufend, eine Abdeckfolie 12 aufgeschweisst ist. Bei der Abdeckfolie kann es sich um eine ggf. mehrlagige Kunststofffolie mit einer Dicke im Bereich zwischen 40 - 220 µm handeln. In der Abdeckfolie 12. ist eine Entlüftungsöffnung 20 vorgesehen, welche durch ein sich unter Überdruck selbsttätig öffnendes und nach Abfall des Überdrucks selbsttätig wieder schliessendes Ventil 21 gebildet wird, wie es grundsätzlich aus EP 1 359 097 bekannt ist. In dem Behälter 10 sind Lebensmittel 30 vorhanden, welche über eine gewisse Eigenfeuchte verfügen und z.B. noch in roh-frischem Zustand sind.

Fig. 1b zeigt das Ventil 21 in vergrösserter Darstellung. Es besteht aus Kunststoff und verfügt über einen formstabilen Ventilkörper 22, in welchem mehrere Öffnungen 23 vorhanden sind. Abgedichtet werden die Öffnungen 23 durch eine elastische Membran 24, welche durch einen Steg 25 in Position gehalten wird. Die Dichtwirkung der Membran wird unterstützt durch Dichtöl, welches vor allem in einer Nut 26 vorhanden ist.

Fig. 2a zeigt den Behälter 10 während eines Erhitzens mit Mikrowellen M zum Haltbarmachen der Lebensmittel 30, wobei sich aus der in den Lebenmitteln 30 enthaltenen Feuchtigkeit Dampf D gebildet und einen Überdruck P> in dem Behälter 10 verursacht hat. Unter der Wirkung dieses Überdrucks P> hat sich das Ventil 21 geöffnet, so dass Dampf D aus dem Behälter 10 ausströmen kann. Unter der Wirkung des Überdrucks P> hat sich zudem die Abdeckfolie 12 aufgewölbt.

Fig. 2b zeigt das Ventil 21 von Fig. 2a im geöffneten Zustand mit elastisch aufgebogener Membran 24.

Würde man den Behälter 10 von Fig. 2a nach dem Erhitzen sich selbst überlassen, dann würde mit einsetzender Wiederabkühlung, nachlassender Dampfbildung und wieder abfallendem Druck das Ventil 21 irgendwann wieder schliessen und es würde danach durch weitere Abkühlung und vor allem durch die dadurch auch bedingte Kondensation des noch vorhandenen Dampfes ein erheblicher Unterdruck P< im Behälter 10 entstehen, wie dies aus dem eingangs erwähnten Stand der Technik bekannt ist. Fig. 3 zeigt einen Behälter 10 mit durch einen solchen Unterdruck P< eingewölbter Abdeckfolie 12.

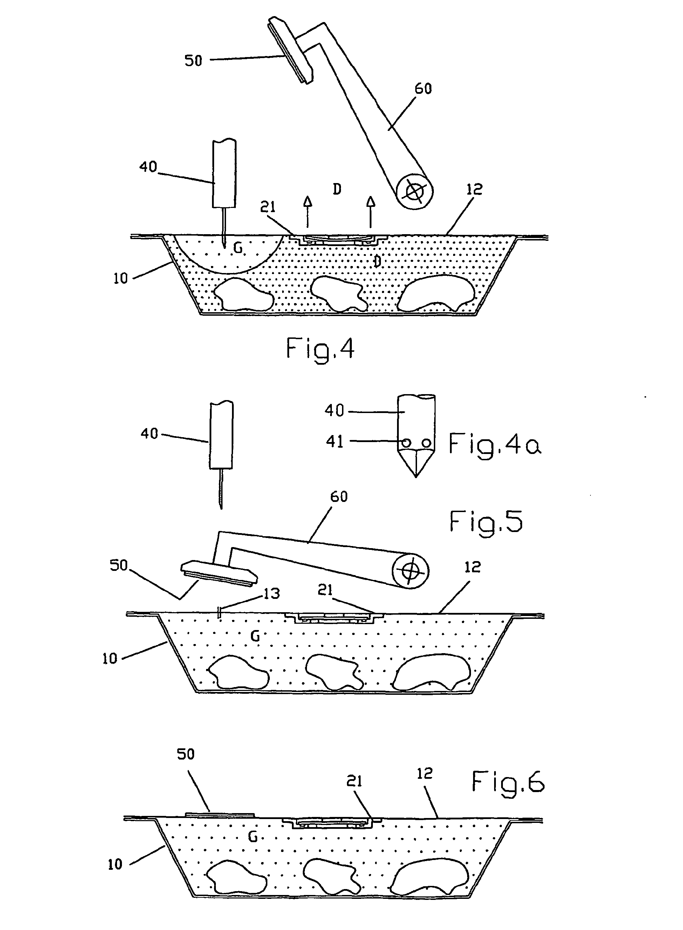

Die vorliegende Erfindung wirkt der Ausbildung eines solchen Unterdrucks durch Injektion eines Gases G in den Behälter 10 entgegen. In Fig. 4 wird dies mittels einer Kanüle 40 ausgeführt, mit welcher die Abdeckfolie 12 (als dünnste Behälterwand) einfach durchstochen wird. Bevorzugt wird der Behälter 10 unter Austreiben von Dampf D durch das Ventil 21 mit dem Gas G sogar gespült. Das Gas G wird z.B. mit Überdruck von 1 - 5 bar, vorzugsweise von 3 bar, injiziert. Es genügt in diesem Fall, den Behälter während 1 - 20 sec, vorzugsweise etwa 8 sec lang, zu spülen.

Als Gas G wird bevorzugt eine Mischung aus Stickstoff und CO₂ im Volumenverhaltnis 80: 20 - 70:30 eingesetzt, wobei das Gas G vorzugsweise auch noch auf eine Temperatur unter 12 °C vorgekühlt wird.

Damit sich ein Unterdruck P< in dem Behälter 10 auch vorübergehend nicht ausbilden kann, muss die Injektion des Gases G relativ schnell ausgeführt werden, möglichst jedoch innerhalb von 150 sec nach dem Ende des Erhitzens.

Fig. 4a zeigt eine bevorzugte Ausführungsform der Spitze einer Kanüle 40 in einer vergrösserten Darstellung. Hier ist die eigentliche Spitze als Vierkant ausgebildet und mit scharfen, geschliffenen Kanten zum einfacheren Einstechen versehen. Oberhalb des angeschliffenen Bereichs sind radial über den Umfang verteilt vier Ausströmöffnungen 41 für das Gas G vorhanden. Mit dieser Ausbildung wird eine besonders gleichmässige und effektive Spülung des Behälters mit dem Gas erreicht.

In Fig. 5 zeigt den Behälter 10 nach der Injektion des Gases G, wobei die Kanüle 40 aus dem Behälter 10 bereits wieder zurückgezogen ist. In dem Behälter herrscht jetzt in etwa Umgebungsdruck vor, was an der flachen Form der Abdeckfolie 12 erkennbar ist. Ein allfällig durch die Injektion des Gases G in dem Behälter 10 erzeugter Überdruck konnte sich durch das Ventil 21 und/oder durch das durch die Kanüle 40 in der Abdeckfolie 12 verursachte Einstichloch 13 abbauen, Mit erfolgtem Druckausgleich konnte sich auch das Ventil 21 wieder schliessen.

Damit das Ventil 21 wieder dicht schliessen kann, darf bei der in Fig. 1b dargestellten Ventilkonstruktion das erwähnte Dichtöl durch den während des Erhitzens, das Ventil 21 durchströmenden heissen Dampf zumindest nicht vollständig ausgespült werden. Hierzu ist es von Vorteil, wenn das Dichtöl ein Silikonöl ist und/oder eine Viskosität (bei 20 °C) von 1000 - 20'000 Centipoise aufweist und/oder in einer Menge von 4 - 8 mg vorhanden ist.

Zum vollständigen Wiederverschliessen des Behälters 10 wird das Einstichloch 13 in der Abdeckfolie 12, wie in Fig. 5 ebenfalls dargestellt, durch Aufbringen eines Aufklebers 50 noch abgedichtet.

Zum Aufbringen des Aufklebers 50 dient in Fig. 5 ein Stempel 60, welcher den Aufkleber 50 in seiner in Fig. 4 dargestellten Position z.B. von einem Etitkettenspender (nicht dargestellt) übernimmt und ihn z.B. durch Ansaugen bis zum Aufbringen auf dem Behälter 10 festhält.

Der Stempel 60 führt eine Schwenkbewegung aus, was den Vorteil hat, dass der Behälter 10 nach dem (hier linearen) Zurückziehen der Kanüle 40 zum Aufbringen des Aufklebers 50 nicht bewegt werden muss. Das Aufbringen des Aufklebers 50 ist deshalb unmittelbar nach dem Zurückziehen der Kanüle 40 möglich und auch dann noch sichergestellt, wenn der Behälter z.B. auf einem Transportband einer Transportvorrichtung transportiert wird und es zu einem Stillstand des Transportbandes kommen sollte. Selbstverständlich könnte alternativ oder zusätzlich auch die Kanüle 40 nichtlinear geführt sein.

Das Aufbringen des Aufklebers 50 sollte auch möglichst unmittelbar nach dem Zurückziehen der Kanüle erfolgen, damit keine Keime von aussen in den Behälter eindringen können. Eine Zeitspanne von 60 sec zwischen der Injektion des Gases und dem Aufbringen des Aufklebers ist jedoch tolerabel.

Fig. 6 zeigt den Behälter 10 mit den erfindungsgemäss haltbar gemachten Lebensmitteln 30 in der Gasatmosphäre G unter Umgebungsdruck und mit dem aufgeklebten Aufkleber 50. In dieser Form ist der Behälter als Transport- und Verkaufspackung geeignet wund wird bevorzugt im weiteren einer üblichen Kühlkette mit Kühltemperaturen im Bereich zwischen 1 - 8 °C zugeführt.

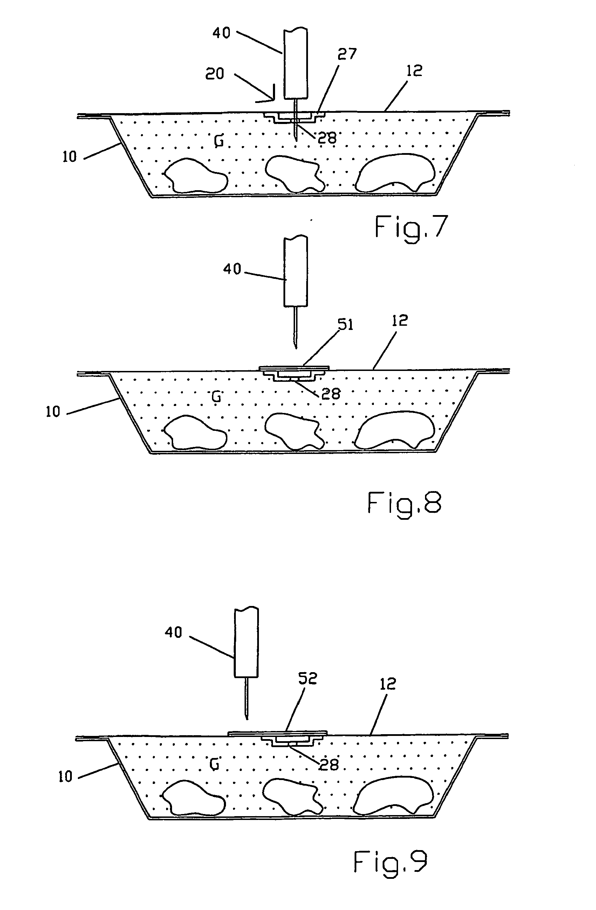

Die Fig. 7 - 9 zeigen eine alternative Ausführungsform mit einem Behälter 10, welcher anstatt mit einem Ventil mit einer einfacher ausgebildeten Entlüftungsöffnung 20 in der Abdeckfolie 12 versehen ist. Die Entlüftungsöffnung 20 weist allerdings, ähnlich wie das Ventil 21, einen formstabilden Körper 27 mit einer definierten Öffnung 28 und dadurch definiertem Strömungswiderstand auf, welche bzw. welcher sich unter den beim Erhitzen auftretenden Belastungen zumindest nicht wesentlich verändert. Nach dem Injizieren des Gases G muss die Öffnung 28 aktiv verschlossen werden, was wieder mit einem Aufkleber erfolgen kann.

Im Beispiel von Fig. 7 wird das Gas G mit einer Kanüle 40 direkt durch die Öffnung 28 in den Behälter 10 injiziert, wodurch kein zusätzliches Einstichloch entsteht. In diesem Fall genügt das Aufbringen eines einzigen Aufklebers 51 über der Öffnung 28 zum Verschliessen des Behälters 10. Nachteilig ist bei dieser Variante allerdings, das der Behälter 10 mit dem Gas nicht so effektiv gespült werden kann.

Möglich ist allerdings auch, mit nicht allzu grossem Abstand von der Entlüftungsöffnung 20 bzw. 28 in den Behälter 10 einzustechen. In diesem Fall kann effektiver gespült und der Behälter 10 immer noch durch Aufbringen lediglich eines, ggf. etwas grösseren Aufklebers 52 abgedichtet werden, so wie dies in Fig. 9 dargestellt ist.

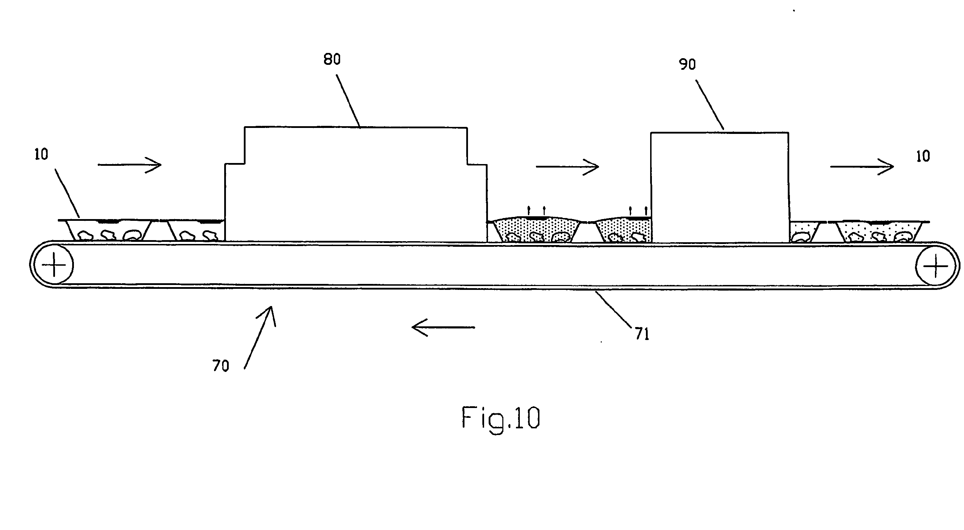

Fig. 10 zeigt noch eine Vorrichtung zur automatisierten Durchführung des erfindungsgemässen Verfahrens mit einer Transportvorrichtung 70 mit einem Transportband 71, welches durch einen Mikrowellentunnel 80 sowie eine Injektionsstation 90 durchgeführt ist. Auf dem Transportband 71 können eine Vielzahl von Behältern 10, wie dargestellt, durch den Mikrowellentunnel sowie die Injektionsstation transportiert werden. Im Mikrowellentunnel 80 erfolgt das beschriebene Erhitzen der Behälter 10 und der in ihnen enthaltenen Lebensmittel mittels Mikrowellen und in der Injektionsstation die beschriebene Gasinjektion sowie das Aufbringen des oder der Aufkleber. Die Vorrichtung von Fig. 10 kann auch so ausgelegt sein, dass mehrere Behälter in mehreren Reihen nebeneinander durch den Mikrowellentunnel 80 und die Injektionsstation 90 transportiert werden.

### BEZEICHNUNGSLISTE

- 10: Behälter
- 11: Rand des Behälters
- 12: Abdeckfolie
- 13: Einstichloch
- 20: Entlüftungsöffnung
- 21: Ventil
- 22: Ventilkörper
- 23: Öffnungen im Ventilkörper
- 24: Membran
- 25: Steg
- 26: Nut für Dichtöl
- 27: formstabiler Körper
- 28: Öffnung in 27
- 30: Lebensmittel
- 40: Kanüle
- 41: Ausströmöffnungen
- 50: Aufkleber
- 51: Aufkleber
- 52: Aufkleber
- 60: Stempel
- 70: Transportvorrichtung
- 71: Transportband
- 80: Mikrowellentunnel
- 90: Injektionsstation
- D: Dampf
- G: Gas
- P>: Überdruck
- P<: Unterdruck

## Patentansprüche

1. Verfahren zum Haltbarmachen von Lebensmitteln, bei welchem die Lebensmittel im feuchten Zustand in einem als Transport- und Verkaufsverpackung geeigneten Behälter mit Entlüftungsöffnung während einer begrenzten Zeit, zumindest jedoch solange mit Mikrowellen erhitzt werden, bis sich heisser Dampf in dem Behälter bildet und durch die Entlüftungsöffnung austritt, **dadurch gekennzeichnet, dass** zur wenigstens teilweisen Kompensation des Druckabfalls in dem Behälter nach dem Ende des Erhitzens ein Gas in den Behälter injiziert wird.

2. Verfahren nach einem Anspruch 1, **dadurch gekennzeichnet, dass** als Gas ein sauerstoffarmes oder-freies Gas und/oder Stickstoff und/oder CO₂, bevorzugt jedoch eine Mischung aus Stickstoff und CO₂ im Volumenverhältnis 80:20 bis 70:30, verwendet wird.

3. Verfahren nach einem der Ansprüche 1 oder 2, **dadurch gekennzeichnet, dass** das Gas unter einem Überdruck von 1 - 5, vorzugsweise von 3 bar injiziert wird.

4. Verfahren nach einem der Ansprüche 1 - 3, **dadurch gekennzeichnet, dass** injizierte Gas auf eine Temperatur unter 12 °C vorgekühlt ist.

5. Verfahren nach einem der Ansprüche 1 - 4, **dadurch gekennzeichnet, dass** das Gas innerhalb 150 sec nach dem Ende des Erhitzens Injiziert wird.

6. Verfahren nach einem der Ansprüche 1 - 5, **dadurch gekennzeichnet, dass** das Gas während 1 - 20 sec, vorzugsweise während 8 sec, injiziert wird.

7. Verfahren nach einem der Ansprüche 1 - 6, **dadurch gekennzeichnet, dass** der Behälter mit dem Gas unter Austreiben von Dampf durch die Entlüftungsöffnung gespült wird.

8. Verfahren nach einem der Ansprüche 1 - 7, **dadurch gekennzeichnet, dass** das Gas mit einer Kanüle injiziert wird.

9. Verfahren nach Anspruch 8, **dadurch** gekenzeichnet, dass mit der Kanüle eine Behälterwand durchstochen wird.

10. Verfahren nach Anspruch 9, **dadurch gekennzeichnet, dass** als Behälterwand, die mit der Kanüle durchstochen wird, eine ggf. mehrlagige Kunststofffolie mit einer Dicke im Bereich zwischen 40 - 220 µm verwendet wird.

11. Verfahren nach einem der Ansprüche 9 oder 10, **dadurch gekennzeichnet, dass** das Einstichloch in der Behälterwand nach dem Zurückziehen der Kanüle abgedichtet wird.

12. Verfahren nach Anspruch 11, **dadurch gekennzeichnet, dass** das Abdichten des Einstichlochs durch Aufbringen eines Aufklebers auf die Behälterwand ausgeführt wird.

13. Verfahren nach einem der Ansprüche 1 - 12, **dadurch gekennzeichnet, dass** die Entlüftungsöffnung nach der Injektion des Gases abgedichtet wird.

14. Verfahren nach Anspruch 13, **dadurch gekennzeichnet, dass** als Entlüftungsöffnung ein sich unter Überdruck selbsttätig öffnendes und nach Abfall des Überdrucks selbsttätig wieder schliessendes Ventil verwendet wird.

15. Verfahren nach Anspruch14, **dadurch gekennzeichnet, dass** ein Ventil mit einem Öl als Dichtmittel verwendet wird, wobei das Öl bevorzugt ein Silikonöl ist und/oder eine Viskosität bei 20 °C von 1000 - 20'000 Centipoise aufweist und/oder in einer Menge von 4 - 8 mg vorhanden ist.

16. Verfahren nach einem der Ansprüche 13 - 15, **dadurch gekennzeichnet, dass** das Abdichten der Entlüfungsöffnung durch Aufbringen eines Aufklebers ausgeführt wird.

17. Verfahren nach den Ansprüchen 12 und 16, **dadurch gekennzeichnet, dass** zum Abdichten des Einstichlochs und der Entlüftungsöffnung derselbe Aufkleber verwendet wird.

18. Verfahren nach den Ansprüchen 12 oder 17, **dadurch gekennzeichnet, dass** das Aufbringen des Aufklebers innerhalb von längstens 60 sec nach dem Injizieren des Gases ausgeführt wird.

19. Verfahren nach einem der Ansprüche 1 - 18, **dadurch gekennzeichnet, dass** beim Erhitzen in dem Behälter eine Temperatur von wenigstens 100°C im Dampf und/oder 80 °C in der Kernzone der Lebensmittel innerhalb von längstens 7 Minuten erzeugt wird.

20. Verfahren nach einem der Ansprüche 1 - 19, **dadurch gekennzeichnet, dass** das Erhitzen im Durchlauf des Behälters durch einen Mikrowellentunnel oder eine Mikrowellenkammer ausgeführt wird.

21. Verfahren nach einem der Ansprüche 1 - 20, **dadurch gekennzeichnet, dass** die Injektion des Gases im Durchlauf des Behälters durch eine Injektionsstation ausgeführt wird.

22. Verfahren nach einem oder mehreren der Ansprüche 12 und/oder oder 16 und/oder 17, **dadurch gekennzeichnet, dass** das Aufbringen des oder der Aufkleber/s ebenfalls beim Durchlauf des Behälters durch die Injektionsstation ausgeführt wird.

23. Verfahren nach den Ansprüchen 20 und 21 oder 22, **dadurch gekennzeichnet, dass** der Behälter auf einer Transportvorrichtung durch den Mikrowellentunnel und die Injektionsstation transportiert wird.

24. Verfahren nach Anspruch 23, **dadurch gekennzeichnet, dass** eine Transportvorrichtung verwendet wird, die für den Transport mehrerer Behälter gleichzeitig in mehreren Reihen nebeneinander ausgebildet ist.

25. Verfahren nach einem der Ansprüche 1 - 24, **dadurch gekennzeichnet, dass** die Lebensmittel in roh-frischem Zustand in den Behälter abpackt werden.

26. Verfahren nach einem der Ansprüche 1 - 25, **dadurch gekennzeichnet, dass** die Lebensmittel unter reduziertem Druck und/oder in einer sauerstoffarmen Schutzgasatmospäre in den Behälter abgepackt werden.

27. Verfahren nach einem der Ansprüche 1 - 26, **dadurch gekennzeichnet, dass** der Behälter nach dem Injizieren des Gases einer Kühlkette mit Kühltemperaturen zwischen 1 - 8 °C zugeführt wird.

28. Verfahren nach einem der Ansprüche 1 - 27, **dadurch gekennzeichnet, dass** ein Behälter verwendet wird, welcher in der Lage ist, während des Erhitzens Temperaturen bis zu 150 °C auszuhalten.

29. Verfahren nach einem der Ansprüche 1 - 28, **dadurch gekennzeichnet, dass** ein Behälter verwendet wird, welcher in der Lage ist, während des Erhitzens einen Überdruck von bis zu 1.5 bar absolut auszuhalten.

30. Verfahren nach einem der Ansprüche 1 - 29, **dadurch gekennzeichnet, dass** ein Behälter mit einer Entlüftungsöffnung verwendet wird, welche auch unter den während des Erhitzens auftretenden Belastungen einen definierten, sich nicht verändernden Strömungswiderstand sowie vorzugsweise einen Strömungsquerschnitt von 1 - 20 mm², weiter vorzugsweise von 3 - 7 mm² aufweist.

## Claims

1. Method for preserving foodstuffs, in which the foodstuffs are heated in the moist state in a container suitable for transport and sales packaging with a ventilation opening, for a defined period by microwave, for at least such a time as hot steam forms in the container and exits through the ventilation opening, **characterised in that** a gas is injected into the container for at least partial compensation of the pressure drop in the container after the end of heating.

2. Method according to claim 1, **characterised in that** an oxygen-deficient or oxygen-free gas and/or nitrogen and/or CO₂, but preferably a mixture of nitrogen and CO₂, is used as the gas in a volume ratio of 80:20 to 70:30.

3. Method according to one of claims 1 or 2, **characterised in that** the gas is injected at an overpressure of 1 to 5, preferably 3 bar.

4. Method according to one of claims 1 to 3, **characterised in that** the injected gas is pre-cooled to a temperature of below 12°C.

5. Method according to one of claims 1 to 4, **characterised in that** the gas is injected within 150 seconds after the end of heating.

6. Method according to one of claims 1 to 5, **characterised in that** the gas is injected for 1 to 20 seconds, preferably for 8 seconds.

7. Method according to one of claims 1 to 6, **characterised in that** the container is flushed with the gas under expulsion of steam through the ventilation opening.

8. Method according to one of claims 1 to 7, **characterised in that** the gas is injected with a cannula.

9. Method according to claim 8, **characterised in that** a container wall is pierced by the cannula.

10. Method according to claim 9, **characterised in that** a possibly multilayer plastic film with a thickness in the range of 40 to 220 µm is used as the container wall that is pierced by the cannula.

11. Method according to one of claims 9 or 10, **characterised In that** the puncture hole in the container wall is sealed after retraction of the cannula.

12. Method according to claim 11, **characterised in that** sealing of the puncture hole is effected by applying an adhesive label to the container wall.

13. Method according to one of claims 1 to 12, **characterised in that** the ventilation opening is sealed after injection of the gas.

14. Method according to claim 13, **characterised in that** a valve that opens automatically under overpressure and closes automatically again after the overpressure drops is used as the ventilation opening.

15. Method according to claim 14, **characterised in that** a valve with an oil as a sealant is used, with the oil preferably being a silicon oil and/or having a viscosity at 20°C of 1,000 to 20,000 centipoise and/or being present at a quantity of 4 to 8 mg.

16. Method according to one of claims 13 to 15, **characterised in that** sealing of the ventilation opening is effected by applying an adhesive label.

17. Method according to claims 12 and 16, **characterised in that** the same adhesive label is used to seal the puncture hole and ventilation opening.

18. Method according to claim 12 or 17, **characterised in that** application of the adhesive label is effected within no more than 60 seconds after injection of the gas.

19. Method according to one of claims 1 to 18, **characterised in that** a temperature of at least 100°C in the steam and/or 80°C in the core zone of the foodstuffs is generated in the container within no more than 7 minutes during heating.

20. Method according to one of claims 1 to 19, **characterised in that** heating is effected as the container passes through a microwave tunnel or a microwave chamber.

21. Method according to one of claims 1 to 20, **characterised in that** injection of the gas is effected as the container passes through an injection station.

22. Method according to one or more of claims 12 and/or or 16 and/or 17, **characterised in that** application of the adhesive label(s) is also effected as the container passes through the injection station.

23. Method according to one of claims 20 and 21 or 22, **characterised in that** the container is transported through the microwave tunnel and the injection station on a transport device.

24. Method according to claim 23, **characterised in that** a transport device is used that is designed to transport several containers simultaneously in several rows alongside one another.

25. Method according to one of claims 1 to 24, **characterised in that** the foodstuffs are packed into the container in the raw/fresh state.

26. Method according to one of claims 1 to 25, **characterised in that** the foodstuffs are packed in the container under reduced pressure and/or in a low-oxygen protective gas atmosphere.

27. Method according to one of claims 1 to 26, **characterised in that** the container is transported to a cold chain with cooling temperatures of 1 to 8°C after injection of the gas.

28. Method according to one of claims 1 to 27, **characterised in that** a container that is able to withstand temperatures of up to 150°C during heating is used.

29. Method according to one of claims 1 to 28, **characterised in that** a container that is able to absolutely withstand overpressure of up to 1.5 bar during heating is used.

30. Method according to one of claims 1 to 29, **characterised in that** a container is used with a ventilation opening that has a defined, unchanging flow resistance and preferably a flow cross-section of 1 to 20 mm², more preferably of 3 to 7 mm², including under the stresses that arise during heating.

## Revendications

1. Procédé de conservation des aliments, dans lequel les aliments, à l'état humide dans un conteneur approprié en tant qu'emballage de transport et de vente avec une ouverture d'aération sont chauffés pendant un temps limité, mais au moins assez longtemps avec des micro-ondes, jusqu'à ce qu'une vapeur plus chaude se forme dans le conteneur et s'échappe par l'ouverture d'aération, **caractérisé en ce qu'**un gaz est injecté dans le conteneur après la fin du chauffage en compensation au moins partielle de la baisse de pression dans le conteneur.

2. Procédé selon la revendication 1, **caractérisé en ce qu'**il est utilisé comme gaz un gaz pauvre en oxygène ou sans oxygène et/ou de l'azote et/ou du CO2, mais de préférence un mélange d'azote et de CO2 dans des proportions volumiques de 80:20 à 70:30.

3. Procédé selon l'une des revendications 1 ou 2, **caractérisé en ce que** le gaz est injecté sous une surpression de 1 à 5, et de préférence 3 bar.

4. Procédé selon l'une des revendications 1-3, **caractérisé en ce que** le gaz est pré-refroidi à une température inférieure à 12°C.

5. Procédé selon l'une des revendications 1-4, **caractérisé en ce que** le gaz est injecté au cours des 150 sec après la fin du chauffage.

6. Procédé selon l'une des revendications 1-5, **caractérisé en ce que** le gaz est injecté pendant 1-20 sec, de préférence pendant 8 sec.

7. Procédé selon l'une des revendications 1-6, **caractérisé en ce que** le conteneur est expurgé par repoussage de la vapeur par le gaz à travers l'ouverture d'aération.

8. Procédé selon l'une des revendications 1-7, **caractérisé en ce que** le gaz est injecté avec une canule.

9. Procédé selon la revendication 8, **caractérisé en ce que** la canule est enfoncée par perforation au travers d'une paroi du conteneur.

10. Procédé selon la revendication 9, **caractérisé en ce qu'**il est utilisé en tant que paroi de conteneur à traverser par la canule, un film plastique éventuellement multicouches avec une épaisseur dans l'intervalle 40-220 µm.

11. Procédé selon l'une des revendications 9 ou 10, **caractérisé en ce que** l'orifice de perforation dans la paroi du conteneur est obturé après le retrait de la canule.

12. Procédé selon la revendication 11, **caractérisé en ce que** l'obturation de l'orifice de perforation est réalisée par application d'une pièce collante sur la paroi du conteneur.

13. Procédé selon l'une des revendications 1-12, **caractérisé en ce que** l'ouverture d'aération est obturée après l'injection du gaz.

14. Procédé selon la revendication 13, **caractérisé en ce qu'**en tant qu'ouverture d'aération il est utilisé une valve s'ouvrant d'elle même en surpression et se refermant d'elle même en sous-pression.

15. Procédé selon la revendication 14, **caractérisé en ce qu'**une valve avec huile est utilisée comme moyen d'obturation, dans lequel l'huile est de préférence une huile de silicone et/ou présente une viscosité à 20°C de 1000 à 20000 Centipoise et/ou est mise en oeuvre dans une quantité de 4 à 8 mg.

16. Procédé selon l'une des revendications 13-15, **caractérisé en ce que** l'obturation de l'ouverture d'aération est réalisée par application d'une pièce collante.

17. Procédé selon les revendications 12 et 16, **caractérisé en ce que** pour l'obturation de l'orifice de perforation et de l'ouverture d'aération la même pièce collante est utilisée.

18. Procédé selon l'une des revendications 12 ou 17, **caractérisé en ce que** l'application de la pièce collante est réalisée dans un intervalle d'au plus 60 sec après l'injection du gaz.

19. Procédé selon l'une des revendications 1-18, **caractérisé en ce que** lors du chauffage il est produit dans le conteneur une température d'au moins 100°C dans la vapeur et/ou 80°C au coeur de l'aliment pendant une durée d'au plus 7 minutes.

20. Procédé selon l'une des revendications 1-19, **caractérisé en ce que** le chauffage est réalisé par convoyage du conteneur au travers d'un tunnel à micro-ondes ou d'une chambre à micro-ondes.

21. Procédé selon l'une des revendications 1-20, **caractérisé en ce que** l'injection du gaz est réalisée dans un poste d'injection au sein du convoyage du conteneur.

22. Procédé selon une ou plusieurs des revendications 12 et/ou 16 et/ou 17, **caractérisé en ce que** l'application de la ou des pièces collantes est réalisée aussi lors du convoyage du conteneur au travers du poste d'injection.

23. Procédé selon es revendications 20 et 21 ou 22, **caractérisé en ce que** le conteneur est transporté au travers du tunnel à micro-ondes et du poste d'injection sur un dispositif de convoyage.

24. Procédé selon la revendication 23, **caractérisé en ce qu'**il est utilisé un dispositif de convoyage qui est agencé pour le convoyage de plusieurs conteneurs simultanément en plusieurs rangées l'une à côté de l'autre.

25. Procédé selon l'une des revendications 1-24, **caractérisé en ce que** les aliments sont conditionnés dans le conteneur à l'état frais.

26. Procédé selon l'une des revendications 1-25, **caractérisé en ce que** les aliments sont conditionnés dans le conteneur sous pression réduite et/ou dans une atmosphère gazeuse protectrice pauvre en oxygène.

27. Procédé selon l'une des revendications 1-26, **caractérisé en ce que** le conteneur après l'injection du gaz suit une chaîne du froid avec des températures réfrigérées entre 1 et 8°C.

28. Procédé selon l'une des revendications 1-27, **caractérisé en ce qu'**il est utilisé un conteneur qui est en mesure de supporter pendant le chauffage des températures jusqu'à 150°C.

29. Procédé selon l'une des revendications 1-28, **caractérisé en ce qu'**il est utilisé un conteneur qui est en mesure de supporter pendant le chauffage une surpression de jusqu'à 1,5 bar.

30. Procédé selon l'une des revendications 1-29, **caractérisé en ce qu'**il est utilisé un conteneur avec une ouverture d'aération qui, même sous les contraintes intervenant pendant le chauffage, présente une résistance aérodynamique stable déterminée ainsi que de préférence une section de passage aérodynamique de 1 à 20 mm², et même de préférence de 3 à 7 mm².
